# EUROPEAN PATENT APPLICATION

(11) **EP 3 792 034 A1**
(43) Date of publication of application: **17.03.2021**
(21) Application number: 19799527.7
(22) Date of filing: 10.05.2019
(51) Int. Cl.: B29C 49/02, B05D 1/40, B05D 7/02, B05D 7/24, B29B 11/14, B29C 49/22, B65D 23/08

(54) **METHOD FOR COATING PREFORM FOR PLASTIC BOTTLE**

(30) Priority: 10.05.2018 JP 2018091354
(71) Applicant: Suntory Holdings Limited, Osaka 530-8203 (JP)
(72) Inventor: NISHIYAMA, Masanori, Tokyo 135-8631 (JP); TOMARI, Ichiro, Tokyo 135-8631 (JP); YAMANE, Ryo, Kawasaki-shi, Kanagawa 211-0067 (JP); SUZUKI, Hideyuki, Tokyo 135-8631 (JP)
(74) Representative: Mewburn Ellis LLP
(86) International application number: PCT/JP2019/018808
(87) International publication number: WO 2019/216428

(57) **Abstract**

In slot-die coating, shrinkage of a PVA film when heating after the application of a PVA solution onto an anchor layer formed on the outer surface of a preform for a plastic bottle is suppressed. A leveling agent such as a siloxane is added to the PVA solution.

## Description

### FIELD

The present invention relates to a method for coating a preform for a plastic bottle in which, in spite of heating after the application of a polyvinyl alcohol (hereinafter abbreviated as PVA) solution onto an anchor layer formed on the outer surface of the preform for a plastic bottle, shrinkage of the PVA film is suppressed.

### BACKGROUND

Currently, polyurethane terephthalate plastic containers (hereinafter also referred to as PET bottles) are widely used for beverages and foods (hereinafter referred to as beverages, etc.), and PET bottles are supplied to bottlers in the form of preforms and are produced by blow-molding.

It is publicly known that a barrier coating is applied to the surfaces of such PET bottles to reduce the permeation of gas, particularly oxygen and carbon dioxide, into and out of the container, thereby improving the shelf life of beverages, etc., inside the bottle.

For example, Patent Literature 1 below discloses the use of PVA as a gas barrier on a PET bottle, and an additional topcoat containing polyvinyl butyral (hereinafter abbreviated as PVB) is used to improve the water resistance of the barrier coating. Such a multilayer coating exhibits good barrier performance against oxygen and carbon dioxide, scratch resistance, and is water-soluble, whereby the topcoat can be recycled after being mechanically destroyed.

PET bottles used for soft drinks are generally produced from so-called "preforms" by injection stretch blow-molding. In general in such blowing methods the preform expands to more than ten times its original volume, resulting in a significantly thinner coating layered on the surface of the preform. Thus, the mechanical and chemical stability of the barrier coating to be ultimately obtained is important.

Thus it is necessary that, before application of the barrier coating, the surface of the preform be chemically or physically pretreated, and pretreatment of the substrate by means of plasma, corona discharge, electron beam, flame, chlorine, fluorine, or chemical etching prior to barrier coating is known.

Furthermore, consumers and manufacturers want to extend the shelf life of beverages, etc., filled in PET bottles without changing the thickness or composition of the PET bottles.

In consideration of such situation of the prior art, Patent Literature 2 below proposes forming a mechanically and chemically stable barrier coating which can withstand blow-molding on the surface of a preform by coating the surface of PET and polypropylene (hereinafter referred to as PP) containers with PVB, PVA, and PVB in this order.

Further, Patent Literature 3 below proposes forming a PVA coating on the tubular body of a preform while rotating the tubular body horizontally, and subsequently forming a PVB coating on the tubular body, and Patent Literature 4 below proposes laminating a gas barrier coating resin laminate, in which layers composed of a predetermined polyvinyl acetal resin are laminated, on a PET bottle.

Furthermore, in order to reduce variations in film thickness of coatings formed on preforms and suppress the occurrence of bubbles in the coating solution applied to the preforms, Patent Literature 5 and 6 below propose coating methods (slot-die method) comprising holding a preform in the horizontal direction, rotating the preform about an axis of rotation thereof, and discharging a coating solution from the slot of a dispenser onto the rotating preform.

### CITATION LIST

### Patent Literature

[PTL 1] WO 03/037969
[PTL 2] Japanese Unexamined Patent Publication (Kokai) No. 2012-250771
[PTL 3] Japanese Unexamined Patent Publication (Kokai) No. 2014-151632
[PTL 4] Japanese Unexamined Patent Publication (Kokai) No. 2014-151631
[PTL 5] Japanese Unexamined Patent Publication (Kokai) No. 2017-65149
[PTL 6] Japanese Unexamined Patent Publication (Kokai) No. 2017-64640

### SUMMARY

### Technical Problem

In preform coating technologies, when the contents of a bottle are carbonated, since a force is exerted by the released carbon dioxide gas in the contained liquid due to aging, the problem of peeling (delamination) of the coating film (barrier/topcoat) on the outer surface of the bottle remains.

In connection thereto, the present inventors have discovered that by forming an anchor layer between the outer surface of the preform and the barrier layer, the occurrence of delamination can be significantly suppressed. Though the present inventors have discovered that variations in the film thickness of the coating formed on the preform can be reduced and the generation of air bubbles in the coating liquid applied to the preform can be suppressed by coating the preform by the slot-die method, when PVA is applied onto the anchor layer by such a method and subsequently heated, the phenomenon in which the PVA film shrinks in the center thereof occurs.

Thus, the object of the present invention is to suppress, in slot-die coating, shrinkage of the PVA film when heating after the application of a PVA solution onto the anchor layer formed on the outer surface of a preform for a plastic bottle.

### Solution to the Problem

As a result of rigorous investigation and repeated experimentation to solve such problems, the present inventors have discovered that by adding a leveling agent such as a siloxane, shrinkage of the PVA film can be suppressed in spite of heating after application of a PVA solution onto an anchor layer formed on the outer surface of a preform for a plastic bottle, and have completed the present invention.

The present invention is as described below.
[1] A method for coating a preform for a plastic bottle, comprising the steps of:
   coating an outer surface of the preform with an anchor coating agent and drying to form an anchor layer, and
   coating the anchor layer with a polyvinyl alcohol (PVA) solution and drying to form a barrier layer, wherein
   the step of coating with the PVA solution further comprises:
      holding the preform in the horizontal direction and rotating the preform about an axis of the preform, and
      discharging the solution in a planar manner from a slot of a dispenser toward the rotating preform,
   a discharge direction of the PVA solution is the normal direction of an outer peripheral surface of the preform, and the PVA solution contains a leveling agent.
[2] The method according to 1, wherein the anchor coating agent contains a polyethylene-based urethane resin.
[3] The method according to 2, wherein the polyethylene-based urethane resin has a glass transition temperature (Tg) of approximately 65°C to less than approximately 90°C.
[4] The method according to 2 or 3, wherein the polyethylene-based urethane resin has a glass transition temperature (Tg) of approximately 80°C to approximately 85°C.
[5] The method according to any one of 1 to 4, wherein the leveling agent is a siloxane.
[6] The method according to any one of 1 to 5, further comprising coating the barrier layer with a polyvinyl butyrate (PVB) solution and drying to form a protective layer.
[7] A method for the production of a preform for a plastic bottle, comprising coating a preform for a plastic bottle by the method according to any one of 1 to 6.
[8] A method for the production of a plastic bottle, comprising blow-molding a preform for a plastic bottle produced by the method according to 7.

### ADVANTAGEOUS EFFECTS OF THE INVENTION

According to the present invention, even in the case in which slot-die coating is used, shrinkage of the PVA film can be suppressed in spite of heating after application of the PVA solution onto the anchor layer.

### BRIEF DESCRIPTION OF DRAWINGS

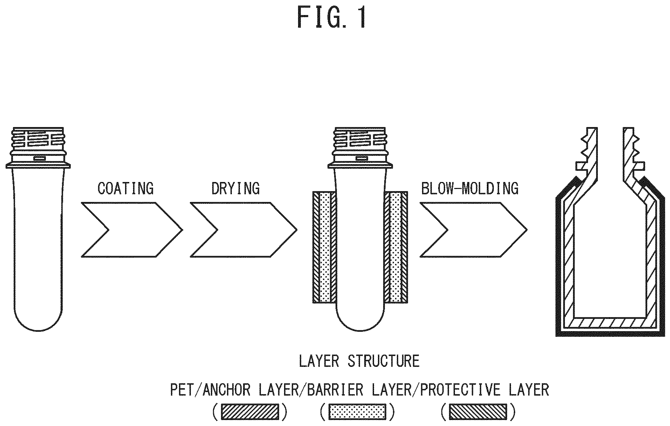

FIG. 1 is a schematic view of a method for the production of a plastic bottle according to the present invention.
FIG. 2 is a schematic front view of the primary portions of a preform coating device according to an embodiment of the present invention.
FIG. 3 is a schematic partial side view of the preform coating device at the time of application of a coating solution.

### DESCRIPTION OF EMBODIMENTS

As used herein, the phrase "plastic bottle" encompasses polyethylene terephthalate (PET), polypropylene (PP), and polyethylene (PE) bottles, and is not limited to PET bottles.

In the coating method of a preform for a plastic bottle according to the present invention, the outer surface of the preform is coated with an anchor coating agent and dried, whereby an anchor layer containing the anchor coating agent is formed on the outer surface of the preform.

The anchor coating agent is not particularly limited and is preferably a polyester-based urethane resin. Polyester-based urethane resins are produced by reacting a polyester polyol and a polyisocyanate in the presence of a low molecular weight diol, diamine, etc., as necessary. The polyester-based urethane resin typically has a glass transition temperature (Tg) of approximately 65 °C to less than approximately 90 °C, preferably has a glass transition temperature (Tg) of approximately 80 °C to approximately 85 °C, and is preferably water-dispersible. Examples of such polyester-based urethane resins include Takelac™ W-5030 (Mitsui Chemicals, Inc.), WS-5000 (Mitsui Chemicals, Inc.), and WS-5984 (Mitsui Chemicals, Inc.).

In the coating of the anchor coating agent, in addition to coating methods which are known in the industry such as, for example, dipping (immersion) methods, blow methods, coater methods, and transfer methods, the slot-die method described below can be used.

In the coating method of the preform for a plastic bottle according to the present invention, the anchor layer is coated with a PVA solution and dried to form a barrier layer.

In the preparation of the PVA solution, for example, water, methanol, ethanol, IPA, MEK, acetone, ethylene glycol, triethylene glycol, glycerin, acetamide, dimethylamide, dimethyl acetamide, dimethyl sulfoxide, cyclohexanone, tetrahydrofuran, DMSO, pyridine, and/or combinations thereof can be used. The concentration of PVA in the solution is preferably approximately 1 to approximately 30 wt%.

The film thickness of the barrier layer (i.e. the film thickness of the PVA coating film) depends on the required gas barrier performance of the PET bottle, and is calculated by, for example, back calculation from a draw ratio of a factor of 5 to 15 for the PET bottle based on a film thickness of 0.01 to 5 µm in the PET bottle after blow-molding. For example, in the case of a draw ratio of 15-fold, the film thickness of the preform is calculated at 0.15 to 75 µm.

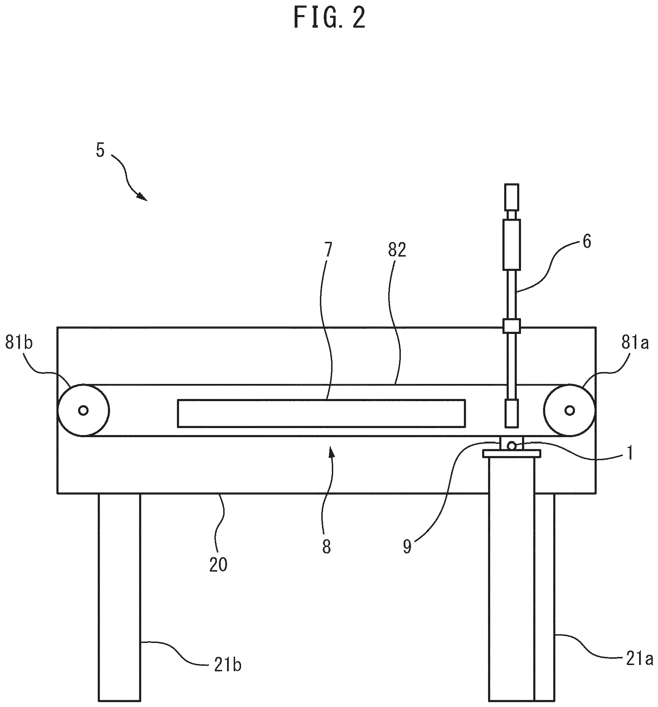

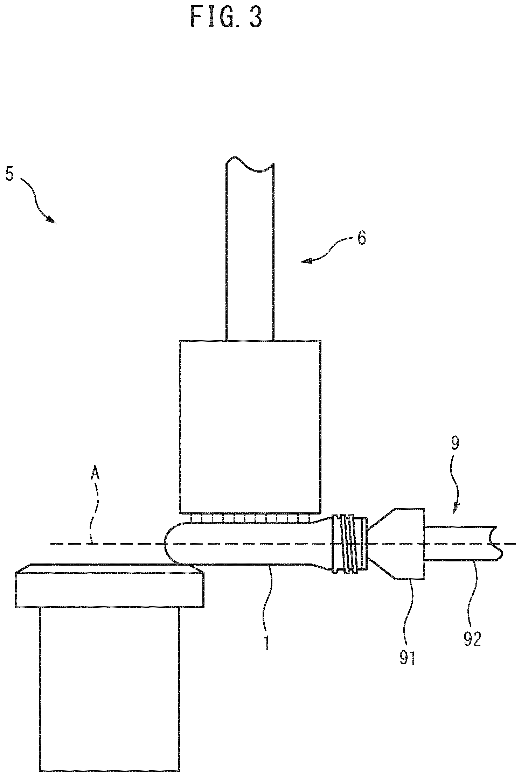

In the method of coating a preform for a plastic bottle according to the present invention, the PVA solution coating method is performed by slot-die coating. Slot-die coating is disclosed in detail in Patent Literature 5 and 6, and is achieved by holding a preform horizontally, rotating the preform about an axis, and thereafter discharging the coating liquid in a planar manner from the slot of a dispenser toward the rotating preform. Typically, slot-die coating is performed using the preform coating device 5 show in FIGS. 2 and 3.

The preform coating device 5 is typically configured such that a preform 1 in which an anchor layer is formed on an outer surface thereof is coated with a PVA solution and dried to form a barrier layer on the anchor layer. Thus, the preform coating device 5 comprises a dispenser 6 which applies the PVA solution onto the preform 1 and a dryer 7 which dries the applied PVA solution. The dryer 7 is arranged spaced from the dispenser 6. Preferably, the dryer 7 is arranged horizontally spaced from the dispenser 6.

The perform coating device 5 further comprises a transport unit 8 which transports the preform 1. The transport unit 8 moves the preform 1 from the position of the dispenser 6 toward the position of the drier 7. For example, the transport unit 8 may be a belt conveyor. The transport unit 8 has two pulleys 81a, 81b and a belt 82 stretched over the pulleys 81a, 81b. The pulleys 81a, 81b are rotatably affixed to a horizontally-extending pulley support plate 20. The pulley support plate 20 is supported by two vertically-extending support pillars 21a, 21b. One of the pulleys 81a, 81b is driven by a motor (not illustrated). By rotating one of the pulleys 81a, 81b clockwise in FIG. 2, the belt 82 is driven clockwise in FIG 2. As a result, the transport unit 8 can transport the preform 1. The number of pulleys may be three or more. Further, the transport unit 8 may be another mechanism such as a chain conveyor as long as the preform 1 can be transported thereby.

The preform coating device 5 further includes a rotary holding unit 9 which holds the preform 1 in the horizontal direction and rotates the preform 1 around the axis A of the preform 1. The rotary holding unit 9 has a chuck 91 for gripping a mouth 1a of the preform 1, and a rotating shaft 92 connected to the chuck 91.

The rotary holding unit 9 holds the preform 1 in the horizontal direction by gripping the mouth 1a of the preform 1 with the chuck 91. Thus, the preform 1 is cantilevered by the rotary holding unit 9. The chuck 91 is, for example, a vacuum chuck which suctions the preform 1 with air or a mechanical chuck which mechanically grips the preform 1. For example, the chuck 91 grips the inside of the mouth 1a of the preform 1. However, the chuck 91 may grip the outside of the mouth 1a of the preform 1.

The rotating shaft 92 is driven by a motor (not illustrated) and rotates together with the chuck 91. The axis of the rotating shaft 92 is coaxial with the axis A of the preform 1. Thus, the preform 1 can be rotated around the axis A of the preform 1 by rotating the rotary holding unit 9. Further, the rotary holding unit 9 can control the rotation speed of the preform 1 by controlling the rotation speed of the motor. The rotation speed of the preform 1 is, for example, 30 rpm to 240 rpm. The rotary holding unit 9 is connected to the belt 82 as shown in FIG 2. Thus, the transport unit 8 can transport the preform 1 by moving the rotary holding unit 9. Further, the preform coating device 5 may further comprise a degassing module for degassing the coating liquid supplied to the dispenser 6.

Though variations in the film thickness of the coatings formed on the preform can be reduced and the generation of air bubbles in the coating liquid to be applied to the preform can be suppressed by performing coating using such a device, when PVA is applied on the anchor layer and subsequently heated, the PVA film shrinks in the center, which causes a problem in that uniform application cannot be achieved. However, such coating defects can be avoided by adding a leveling agent to the PVA solution.

The leveling agent which can be used in the present invention is not particularly limited as long as uniform applicability can be imparted to the PVA solution, and is preferably a TM siloxane, a silicone resin, or a fluororesin. Examples of such leveling agents include DYNOL - 980 (Air Products), KP-104 and KP-110 (Shin-Etsu Silicone), and Megaface F-477 and RS-72-K (DIC Corporation).

The concentration of the leveling agent in the PVA solution is typically approximately 0.0001 to approximately 0.1 wt%, preferably approximately 0.001 to 0.01 wt%, and optimally approximately 0.004 to approximately 0.006 wt%.

Though PVA can significantly reduce the gas permeability of the substrate (particularly O₂ and CO₂), thereby improving the shelf life of the contained food or beverage such as soft drink or beer, the applications of coatings composed of PVA alone are limited due to the hygroscopicity thereof. Thus, polyvinyl acetals, for example, PVB, have been found to be suitable as the top-coating (protective layer) for the PVA layer (barrier layer) and have been used. PVA polymers and PVB polymers have similar polymer backbone chains, as illustrated in the following chemical formulae: 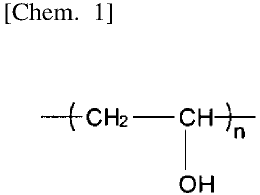 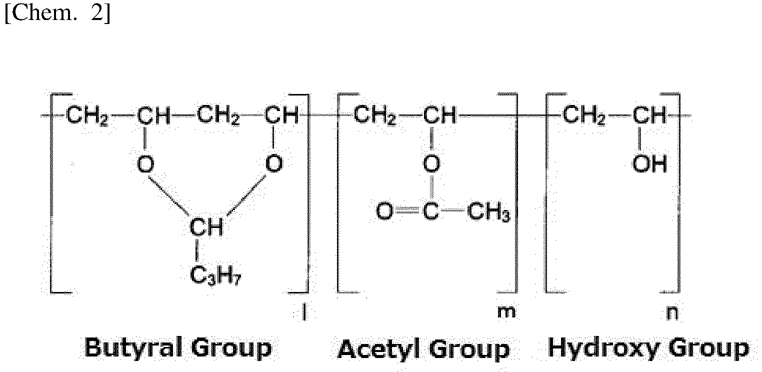 and are compatible in a wide range of mixtures.

Thus, in the method according to the present invention, the barrier layer is preferably coated with a PVB solution and dried to form a protective layer.

In the preparation of the PVB solution, methanol, ethanol, n-propanol, IPA, n-butanol, octanol, methyl cellosolve, ethyl cellosolve, butyl cellosolve, acetone, MEK, MIBK, cyclohexanone, isophorone, N,N-dimethylacetamide, N,N-dimethylformamide, N-methyl-2-pyrrolidone, methyl acetate, ethyl acetate, isopropyl acetate, n-butyl acetate, ethyl ether, dioxane, tetrahydrofuran, toluene, xylene, pyridine, dimethyl sulfoxide, acetic acid, terpineol, butyl carbitol, butyl carbitol acetate, and/or combinations thereof can be used as the solvent. The concentration of PVB in the solution is preferably approximately 0.1 to approximately 50 wt%.

The film thickness of the protective layer (i.e. the film thickness of the PVB coating film) is calculated by back-calculation from a draw ratio of a factor of 5 to 15 for the PET bottle based on a film thickness of 0.01 to 5 µm in the PET bottle after blow-molding. For example, in the case of a draw ratio of 15-fold, the film thickness for the preform is calculated at 0.15 to 75 µm.

In the coating of the PVB solution, in addition to coating methods which are known in the industry such as, for example, dipping (immersion) methods, blow methods, coater methods, and transfer methods, the slot-die method described above can be used.

The drying means in each of the above steps is not particularly limited as long as each layer is formed, but it is preferably carried out with a heater and blowing air (ambient temperature or hot air). In order to shorten the heating and drying time of the coating solution, it is effective to heat from the inside of the film by selecting a heat source having a heating wavelength suitable for the absorption wavelength of water, which is the solvent, and the hydroxyl group. From this viewpoint, it is preferable to use a carbon heater which generates near-infrared to mid-infrared rays. Furthermore, in order to efficiently remove the evaporated water without cooling the film, a far-infrared heater, blowing air (ambient temperature), or hot air may be used in combination along with the use of a carbon heater which generates near-infrared to mid-infrared rays.

The drying temperature in each of the steps described above is preferably ambient temperature to 80°C. At 100°C or higher there is a risk of boiling of the solution, and if the temperature exceeds 80°C, there is a risk that the substrate will whiten or deform due to overheating.

Another embodiment of the present invention provides a method for the production of a preform for a plastic bottle in which the preform coating method according to the present invention is used.

A plastic bottle can be produced by stretch blow-molding the obtained preform. Thus, yet another aspect of the present invention provides a method for the production a plastic bottle including a step of blow-molding a preform for a plastic bottle produced by the method according to the present invention.

According to such a method, a plastic bottle can be produced having a coating film in which an anchor layer, a barrier layer, and/or a protective layer are uniformly formed on the outer surface of the bottle and without whitened portions.

### EXAMPLES

### Example 1: Evaluation of PVA Slot-Die Method Coating Defects

The outer surface of a preform (24 g) for a 500 ml PET bottle was irradiated with plasma for approximately 3 seconds using an atmospheric plasma irradiation surface modifier (PS-1200AW, produced by Wedge, Co.), and thereafter heated to 50°C in an oven. Thereafter, thepreform was dipped once in each type of anchor coating agent such as Takelac™ W-5030 (produced by Mitsui Chemicals, Inc.) and dried in a 50°C oven for approximately 30 minutes to form an anchor layer. After drying, the preform was cooled to ambient temperature. Then, the preform was set in the chuck of a laboratory coating device and rotated at 60 rpm. Approximately 500 ml of PVA aqueous solution containing a leveling agent was charged into the tank of a slot-die coating device, the coating amount of the Heishin dispenser was set to 300 mg, the coating width was set to 40 mm, and the solution was applied once onto the rotating preform. The PVA aqueous solution containing the leveling agent was prepared by charging PVA powder (Exeval™ HR-3010, produced by Kuraray, Co., Ltd.) into a beaker provided with a heating device and a stirrer, adding ambient temperature water thereto to achieve a concentration of 10 wt%, heating the mixture to a solution temperature of 95°C while stirring, continuing stirring until the PVA was completely dissolved, and thereafter adding 0.005 wt% of DYNOL™ 980 (Air Products) as the leveling agent and stirring at ambient temperature for 30 minutes. After the completion of coating, the preforms were transported into a heater set to a temperature of 300°C and dried for 1 minute. After drying, it was visually confirmed whether the PVA solutions had been uniformly applied.

Evaluation was performed in the same manner for the case in which coating was performed by a dipping method in place of the slot-die method, the case in which coating was performed by a dipping method in which a leveling agent was not added, the case in which coating was performed by a slot-die method in which IPA was added in place of the leveling agent, and the case in which coating was performed by the slot-die method in which a leveling agent and IP were added.

The results are shown in Table 1 below.

**Table 1**

| Application Method | IPA [%] | Leveling Agent [ppm] | PF Applicability (Shrinkage) |
|---|---|---|---|
| Dipping | | | ○ |
| Dipping | | 5 | ○ |
| Slot-Die | | | x |
| Slot-Die | 5 | | ○ |
| Slot-Die | 5 | 5 | ○ |
| Slot-Die | | 5 | ○ |

As shown in Table 1, though PVA shrinkage occurred in the case in which PVA was coated without the addition of a leveling agent after formation of the anchor layer by the slot-die method, in the case in which coating was performed by the slot-die method in which a leveling agent was added and the case in which coating was performed by the slot-die method in which a leveling agent and IPA were added, shrinkage of the PVA did not occur.

Note that when the appearance of PET bottles blow-formed with preforms coated by the slot-die method was confirmed, whitening was observed in all cases in which IPA was added, but no whitening was observed when only the leveling agent was added.

## Claims

1. A method for coating a preform for a plastic bottle, comprising the steps of:
coating an outer surface of the preform with an anchor coating agent and drying to form an anchor layer, and
coating the anchor layer with a polyvinyl alcohol (PVA) solution and drying to form a barrier layer, wherein
- the step of coating with the PVA solution further comprises:
holding the preform in the horizontal direction and rotating the preform about an axis of the preform, and
discharging the solution in a planar manner from a slot of a dispenser toward the rotating preform;
- a discharge direction of the PVA solution is the normal direction of an outer peripheral surface of the preform, and the PVA solution contains a leveling agent.

2. The method according to claim 1 wherein the anchor coating agent contains a polyethylene-based urethane resin.

3. The method according to claim 2, wherein the polyethylene-based urethane resin has a glass transition temperature (Tg) of approximately 65°C to less than approximately 90 °C.

4. The method according to claim 2 or 3 wherein the polyethylene-based urethane resin has a glass transition temperature (Tg) of approximately 80°C to approximately 85°C.

5. The method according to any one of claims 1 to 4 wherein the leveling agent is a siloxane.

6. The method according to any one of claims 1 to 5 further comprising coating the barrier layer with a polyvinyl butyrate (PVB) solution and drying to form a protective layer.

7. A method for the production of a preform for a plastic bottle, comprising coating a preform for a plastic bottle by a method according to any one of claims 1 to 6.

8. A method for the production of a plastic bottle, comprising blow-molding a preform for a plastic bottle produced by a method according to claim 7.
